(19) **Europäisches Patentamt / European Patent Office / Office européen des brevets**

(11) **EP 1 179 811 B1**

(12) **EUROPEAN PATENT SPECIFICATION**

(45) Date of publication and mention
of the grant of the patent:
**15.10.2008 Bulletin 2008/42**

(51) Int Cl.:
**G07D 7/00** *(2006.01)* **G06K 19/077** *(2006.01)*
**B42D 15/00** *(2006.01)*

(21) Application number: **01119470.1**

(22) Date of filing: **13.08.2001**

(54) **Security document and process for producing a security document**

Sicherheitsdokument und Verfahren zu dessen Herstellung

Document de sécurité et son procédé de fabrication

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **11.08.2000 EP 00117474**

(43) Date of publication of application:
**13.02.2002 Bulletin 2002/07**

(73) Proprietor: **European Central Bank
60311 Frankfurt am Main (DE)**

(72) Inventor: **Arrieta, Antonio Jesus
6-60311 Frankfurt am Main (DE)**

(74) Representative: **Luderschmidt, Schüler & Partner
Patentanwälte
John-F.-Kennedy-Strasse 4
65189 Wiesbaden (DE)**

(56) References cited:
**DE-A- 19 630 648**    **DE-A- 19 718 916**
**DE-A- 19 734 855**    **FR-A- 2 802 001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to a security document and a process for producing a security document.

The identification and authentication of security documents, such as banknotes, cheques, stocks, bonds, passports, identity cards etc, is a long-standing problem. One of the purposes of the different security devices included in the above mentioned security documents is to store information that allows both users and machines to discriminate between real and forged documents and to discriminate among different real security documents.

There have been adopted different techniques in order to achieve an easy and secure authentication and/or identification of security documents, especially banknotes. These techniques make use of special papers, special inks and special patterns, the inclusion of watermarks and the inclusion of plastics, metal or magnetic strips.

Above all, it is known to embed a flat chip in a bank note. The first surface of the chip is attached to a metal carrier plate to increase the mechanical stability of the chip and to simplify the handling of the chip during the production of the security document. On the second surface of the chip there is provided a layer serving as a protection against chemical attacks due to an aggressive environment. The chip stores data which might be read out by another device in a noncontacting manner. A bank note including a chip is described in the German Patent DE 196 01 358.

The transponder of the known banknote is preferably arranged in the vicinity of the metal strip of the banknote in order to increase the mechanical stability of the transponder. The antenna is formed by the metal strip of the banknote. To provide a protection against chemical attacks, the transponder is embedded in a sealing compound.

A banknote and, in general, a security document is used by the public. As the general public should not notice the incorporation of a security device, it is necessary to hide it in order to prevent destructive manipulation and illegal modification attempts.

In all commercial radio frequency emitter devices, the most evident part is the antenna (in loop size, straight, etc.). The perception of these elements makes the user aware of the presence of a radio frequency emitter device. Security documents as banknotes, passports, cheques, etc. are handled under quite different conditions. Those documents must be strong enough for resisting environmental, chemical and mechanical attacks. This is part of the normal life of those security documents. These normal life conditions of a banknote or security document can be quite dangerous for a sophisticated electronic device, like the security device, if is not sufficiently protected.

Both the energising and communication between an external reader/writer device and the security device inserted in the security document is accomplished through an antenna. For that reason the electronic device inserted in the security document must be equipped with a proper antenna to guarantee a good electromagnetic signal transmission and reception.

Antennas can be made using conductor elements in different shapes and lengths resonating at the wavelength used. Longitudinal antennas are usually not used for the big length necessary in order to maximise the effect. In fact, for a typical 13.56 MHz frequency transmission, the length of the antenna should be 22.12 meters; this is not practical at all for security documents due to the size of the document needed and how evident that it becomes for the public.

A banknote production process is a quite complex and expensive combination of paper making, printing and holograms stamping. The inclusion of a new element, like a radio frequency emitter device, in a security document adds a new step to the manufacturing process with the subsequent cost increase due to machine usage, manpower, raw materials, waste, etc.

A banknote comprising a security device is described in the published German Patent Application DE 196 30 648 A1. The security device utilises an antenna to exchange the information with an external reader/writer device via the transmission of an electromagnetic signal through the generation of an induced voltage in the antenna. With the use of an energising radio frequency signal, the reader/writer device can communicate with the security device inserted in the banknote without the necessity of any external power source such as a battery. Such devices are well known as transponders.

FR2802001 describes a security document comprising a hologram and an emitter device for emitting predetermined data in a contactless manner, the emitter device comprising an integrated circuit and an antenna connected to the integrated circuit.

DE19734855 discloses a security document comprising a hologram having a substrate with a metal layer of predetermined arrangement.

It is an object of the invention to provide a security document comprising an improved security device preventing destructive manipulation and illegal modification attempts and being strong enough for resisting environmental, chemical and mechanical attacks. Another object of the invention is to provide a cost saving process for producing a security document comprising a security device.

These objects are solved by a security document and a process for producing the security document comprising the features of claims 1 and 7, respectively. Further advantageous aspects of this invention are subject matter of the dependent claims.

According to the invention, the following advantages arise as a consequence of the combination of a radio frequency emitter device and a hologram in its combined usage both for security documents protection and identification.

This combination of an emitter device for emitting predetermined data in a noncontacting manner with a hologram will preferably consist in the embedding of the emitter device in the hologram substrate.

These advantages can be split in product performance and in process performance. From the point of view of the product performance, three advantages are obtained as a consequence of this combination: a hiding effect, a protection effect and an antenna effect of the hologram for the radio frequency emitter device.

From the point of view of the process performance, the main advantage is cost saving in the document production process.

As mentioned before, this combination means important improvement, from the point of view of product usage, and the occurrence of a hiding effect, a protection effect and the emission usage of the hologram for the radio frequency emitter device. These product improvements are explained as follows.

Holograms are widely used in security documents as an authentication feature due to the impossibility of reproduction by illegal way. Users of security documents are aware of these elements and recognise them as a proof of authenticity.

The inventor has recognized that holograms have large-enough surfaces in order to integrate the antenna for the radio frequency emitter device and to hide the radio frequency emitter device.

With this hiding effect, the security of the radio frequency emitter device is improved due to the impossible access for the public and, therefore, the impossible illegal manipulation of the device. Also, any attempt of physical manipulation by the public of the radio frequency emitter device will mean the destruction of the hologram and the loss of authenticity of the security document.

According to the prior art, the transponders are protected by separate layers or sealing compounds. In contrast to the known security documents, the partial destruction of the hologram is easily recognizable since the hologram is subject of a visual inspection or examination.

The inclusion of the emitter device in the hologram confers on it a unique protective layer from environmental, mechanical and chemical attacks.

The use of a radio frequency emitter device combined with a hologram means an important process cost saving in comparison with the application of a device of these characteristics, in a separately process, on a security document.

The integration of a radio frequency emitter device with a hologram means cost saving in machine using, because this new combined security element can be applied at the same production step that a normal hologram. The cost reduction comes from the saving in machinery, manpower, waste, etc. It is also expected that the raw material cost of this combined new element would be lower than the cost of a hologram and a radio frequency emitter device separately.

Crucial requests for any security document production facility are security of the installations, control on produced goods and security elements used. The applying of holograms to security documents requires strict control of the amount of holograms used, both applied and wasted ones. The combination of the emitter device and the hologram allows the security documents producer to control in a faster and more secure way any single element of this combination, and a quite easy deactivation of the radio frequency emitter device in the waste.

As mentioned before, a major aspect of the invention is that the metal layer of the hologram is at least partially formed like an antenna, the emitter device being connected to the antenna-like metal layer, i. e. the metal layer of the hologram forms the antenna of the radio frequency emitter device.

Using an antenna integrated in a hologram, once the security document with emitter device integrated in a hologram is in close proximity to the external reader/writer device, the time-varying electromagnetic field $B$ that is produced by this external device induces a voltage (called electromotive force or simply EMF) in the antenna integrated in the hologram. The induced voltage in the antenna integrated in the hologram causes a flow of current on this metal layer. The law that explains this phenomenon is called Faraday's law: the induced voltage on the antenna integrated in the hologram is equal to the time rate of change of the electromagnetic flux Ø. The voltage generated in the antenna integrated in the hologram will depend on the current that circulates on the external reader/writer device, the extension of the hologram integrated antenna of the security device and the distance between both devices.

The current flow in the external reader/writer device produces a magnetic flux that causes a voltage induction at the antenna integrated in an hologram inserted in the security element. The voltage induced in the antenna portion of the metal layer may be calculated by the following equation:

$$V = -N_2 \frac{d\Psi}{dt} = -N_2 \frac{d}{dt}\left( \int B \cdot dS \right) = -N_2 \frac{d}{dt}\left[ \int \frac{\mu_0 i_1 N_1 a^2}{2(a^2 + r^2)^{3/2}} \cdot dS \right] = -\left[ \frac{\mu_0 N_1 N_2 a^2 (\pi b^2)}{2(a^2 + r^2)^{3/2}} \right] \frac{di_1}{dt} = -M \frac{di_1}{dt}$$

where:

> $V$ = voltage induced in the antenna integrated in the hologram
> $\Psi$ = Magnetic flux through each turn
> $B$ = magnetic field
> $N_2$ = number of loops in the integrated antenna
> $i_1$ = current on the external reader/writer antenna
> $a$ = radius of the external reader/writer antenna
> $b$ = radius of the integrated antenna
> $N_1$ = number of loops in the antenna of the reader/writer device.
> $r$ = distance between the two antennas.

$M$ = mutual inductance between the two antennas. $M = \left[ \dfrac{\mu_0 N_1 N_2 (ab)^2}{2(a^2 + r^2)^{3/2}} \right]$

As shown in the above equation, the voltage in the antenna integrated in a hologram is largely dependent on the mutual inductance between the two antennas. This mutual inductance is a function of the antenna geometry and the distance between them. As can be deduced the above equation, induced voltage in the antenna integrated in a hologram decreases with the distance between this element and the external reader/writer device at the cubic potency. For that reason the usage of an hologram for integrating the antenna, that is always in the security element surface means an important improvement for signal transmission, due to the important reduction of the distance with the external reader/writer device.

Antenna size is the second parameter that maximises the induced magnetic field. For different shapes of antennas - like a circular one loop antenna, a circular several loop antenna and a square loop antenna - as a rectangular cross section, the inductance is maximised when the thickness is reduced.

Using as antenna the metallic layer of an hologram maximises the inductance of all of those sort of antennas, because of the extremely thin hologram metal layer used for this proposal. Therefore, the electrical current produced in the antenna integrated in the hologram is maximised when the security document comes into the field created by the external reader/writer device.

Also, using as antenna the metallic layer of a hologram due to the precision of the hologram manufacturing process, all shapes of antenna can be easily produced and for each specific transmission requirement a different antenna integrated in hologram shapes can be produced.

The magnetic flux through the antenna is maximised when the antenna loop is perpendicular to the electromagnetic field. This is due to the inner product of two vectors, as is the case of the electromagnetic field and the surface of the hologram integrated antenna, which is maximised when they are perpendicular, so the cosine of the angle reaches its maximum value, 1. The hologram applied to a security document remains always in the same position on the surface. The integration of an antenna in an hologram makes the antenna remaining always parallel to the security document surface and perpendicular to any external reader/writer device. Therefore, the voltage in the hologram integrated antenna is maximised.

According to a preferred embodiment of the invention, the metal layer is partially formed like a loop size antenna. Loop size antennas are more feasible than longitudinal ones, and as Faraday's law states that a time-varying electromagnetic field through a surface bounded by a closed path induces a voltage around the loop, the transmission and reception effect is also reached.

Loop size antennas can be easily manufactured using the metal layer of the hologram, and the final result of this combination reaches the technical necessities of electromagnetic signals transmission/reception and the necessary discretion for the emitter device once inserted in the security document.

Holograms that are used in security documents consist in few microns of metal (usually aluminium) over a plastic substrate. The advanced technology used in this manufacturing process makes different sizes of loops, as circular, rectangular, etc. easy available.

The antenna portion of the metal layer may be circular with a single loop. The inductance for a single loop circular antenna portion integrated in the metal layer is:

$$L = 0.01257a \left[ 2.303 \log_{10} \left( \frac{16a}{d} - 2 \right) \right] \; (\mu H)$$

where:

$a$ = mean radius of the hologram integrated antenna loop, in cm
$l$ = length of the integrated antenna, in cm

According to a preferred aspect of the invention the metal layer is at least partially formed like a loop size antenna having multiple loops. The antenna portion of the metal layer may for example be circular with multiple loops. The inductance for a multiple loop circular antenna inductor is:

$$L = \frac{0.31(aN)^2}{6a + 9b + 10h} \; (\mu H)$$

where:

$a$ = mean radius of the hologram integrated antenna loop, in cm
N = number of loops of the integrated antenna
h = thickness of the film of the integrated antenna
$b$ = winding length of the integrated antenna, in cm

According to a preferred aspect of the invention the security device is attached to the security document via an adhesive layer disposed on the surface of the substrate of the hologram opposite to the surface with the metal layer thereon.
According to another preferred aspect of the invention the security document is a banknote.
The invention can be more clearly understood by means of examples which are described in the following in conjunction with the accompanying drawings, where

Fig. 1   shows a diagrammatic, perspective view of a security document according to the invention with a security device according to the invention,
Fig. 2   shows an expanded vertical cross-section view taken through the security document of figure 1 at the location of the security device according to the invention,
Fig. 3   shows a top view of the security device of figure 1 and 2 according to a first embodiment of the invention and
Fig. 4   shows a top view of the security device of figure 1 and 2 according to a second embodiment of the invention.

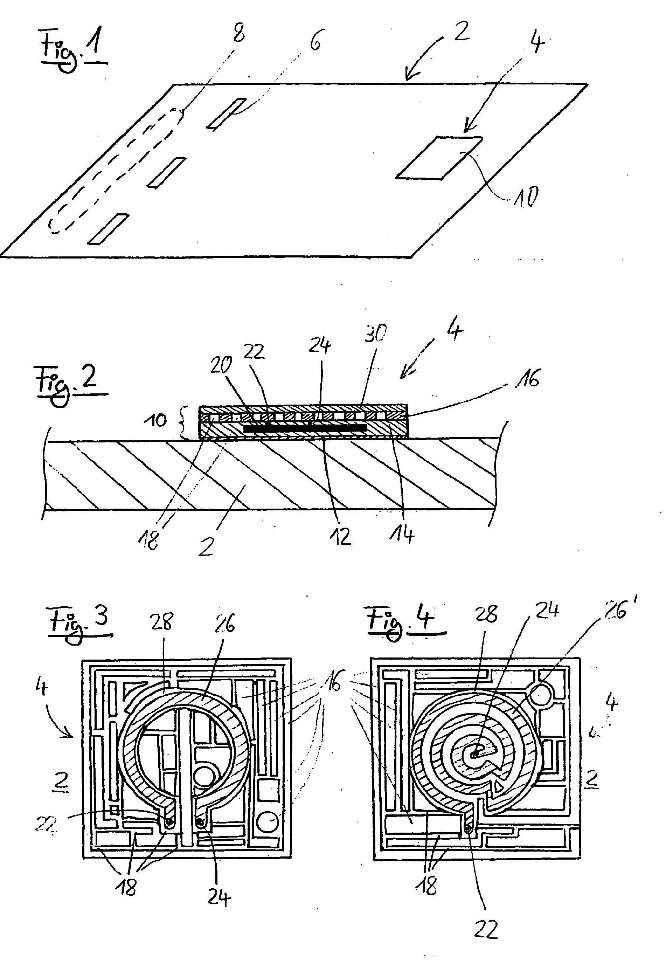

Figure 1 shows a perspective view of a security document 2 according to the invention, such as banknotes, checks, stocks, bonds, passports, identity cards etc. The security document comprises a hologram 10. On the security document 2 there is further provided a radio frequency emitter device 4. Along with the emitter device 4 there may also provided other security elements, for example a metal strip 6 being partially embedded in the security document 2 or a watermark 8.
Figure 2 shows an expanded vertical cross-section view taken through the security document of figure 1 at the location of the emitter device 4. The emitter device 4 is part of the hologram 10 of the security document.
The hologram 10 comprises a substrate 14 which is usually used in holograms and which may be made of plastic and a metal layer 16 provided on the substrate. The metal layer 16 is usually made of aluminium. The substrate is attached to the security document via an adhesive layer 12.
On the metal layer 16, which comprises recesses 18 forming the hologram, there is provided a transparent layer 30 for protection of the metal layer 16 from environmental, chemical or mechanical attacks.
According to the invention, the emitter device 4 comprises an integrated circuit 20 which could be a transponder. The integrated circuit 20 comprises a storing device for storing data for the identification and authentication of the banknote. The data can be read out in a noncontacting manner, as will be described later.

In the embodiment shown in figure 2, the integrated circuit 20 is integrated into the substrate 14 of the hologram element 10, i. e. the transponder 20 is completely surrounded by the material of the substrate 14 so that an excellent protection of the transponder 20 against environmental influences is achieved. The integrated circuit 20 further comprises two connections 22, 24 each extending between the circuit 20 and the metal layer 16 so that the circuit is connected with the metal layer 16 or at least a part of it.

Figure 3 shows a top view of the emitter device 4 of figures 1 and 2 according to the invention. The metal layer 16 comprises an antenna portion 26, which is shown with a hatching. The antenna portion 26 is connected with the integrated circuit 20 (fig. 2) via the connections 22, 24 and is essentially ring-shaped. In order to achieve an unhindered flow of current from one connection 22, 24 through the antenna portion 26 to the other connection 24, 22, it is preferred that the antenna portion 26 is completely separated from the other portions of the metal layer 26 by a recess 28. It should be noted that the other portions of the metal layer 16 are merely shown schematically.

Figure 4 shows a top view of the emitter device 4 of figures 1 and 2 according to the invention. The main difference between the first embodiment shown in figure 3 and the second embodiment of figure 4 is that the antenna portion 26' in figure 4 is spiral-shaped so that the antenna portion comprises multiple loops. It should be noted that the antenna could be designed in any shape.

The security document 2 comprising the emitter device 4 will be brought in close proximity to an external reader/writer device (not shown). The external reader/writer device produces a time-varying electromagnetic field *B*. Thus, a voltage (called electromotive force or simply EMF) is induced in the antenna portion 26, 26' of the metal layer 16 of the hologram element 10. The induced voltage in the antenna portion 26, 26' of the hologram element 10 causes a flow of current in the antenna portion 26, 26'. Since the integrated circuit 20 (transponder) is connected with the antenna portion 26, 26' via connections 22, 24, the transponder 20 is supplied with electric power. As a result, the transponder 20 sends a signal being representative for the information being stored in the storing device. This signal is received by the external reader/writer device. Thus, the information inside the storing device of the transponder 20 has been made available.

## Claims

1. Security document comprising a hologram (10) and an emitter device (20, 26) for emitting predetermined data in a noncontacting manner, the emitter device (20, 26) being integrated into the hologram (10) and comprising an integrated circuit (20) and an antenna (26) connected to the integrated circuit, **characterized in that** the hologram (10) comprises a substrate (14) with a metal layer (16) disposed on at least one surface thereof, the metal layer (16) is at least partially formed like an antenna, and the integrated circuit (20) is connected to the antenna-like metal layer (26), which forms the antenna of the emitter device.

2. Security document according to claim 1, wherein the metal layer (16) is partially formed like a loop size antenna (26).

3. Security document according to claim 1, wherein the metal layer (16) is partially formed like a loop size antenna having multiple loops (26').

4. Security document according to one of the claims 1 to 3, wherein the integrated circuit (20) is integrated into the substrate of the hologram.

5. Security document according to one of the claims 1 to 4, wherein the substrate (14) is attached to the security document via an adhesive layer (12) disposed on the side of the substrate opposite to the side with the metal layer (16) thereon.

6. Security document according to one of claims 1 to 5, wherein the security document (2) is a banknote.

7. Process for producing a security document of one of claims 1 to 6 comprising the step of integrating the emitter device (20,26) comprising an integrated circuit (20) and an antenna (26) connected to the integrated circuit into the hologram (10) comprising a substrate (14) with a metal layer (16), wherein the metal layer (16) of the hologram (10) is at least partially formed like an antenna (26) and the integrated circuit (20) is connected to the antenna-like metal layer (26), which forms the antenna of the emitter device.

8. Process according to claim 7, wherein the integrated circuit (20) of the emitter device (20,26) is integrated into the substrate (14) of the hologram (10).

**EP 1 179 811 B1**

**Patentansprüche**

1. Sicherheitsdokument, das ein Hologramm (10) und eine Emittervorrichtung (20, 26), um vorgegebene Daten auf kontaktlose Weise auszusenden, umfasst, wobei die Emittervorrichtung (20, 26) in das Hologramm (10) integriert ist und eine integrierte Schaltung (20) und eine mit der integrierten Schaltung verbundene Antenne (26) umfasst, **dadurch gekennzeichnet, dass** das Hologramm (10) ein Substrat (14) mit einer Metallschicht (16) umfasst, die auf wenigstens einer Oberfläche davon angeordnet ist, wobei die Metallschicht (16) wenigstens teilweise wie ein Antenne geformt ist und wobei die integrierte Schaltung (20) mit der antennenartigen Metallschicht (26), die die Antenne der Emittervorrichtung bildet, verbunden ist.

2. Sicherheitsdokument gemäß Anspruch 1, bei dem die Metallschicht (16) teilweise wie eine Ringgrößenantenne (26) geformt ist.

3. Sicherheitsdokument gemäß Anspruch 1, bei dem die Metallschicht (16) teilweise wie eine Ringgrößenantenne mit mehreren Ringen (26') ausgebildet ist.

4. Sicherheitsdokument gemäß einem der Ansprüche 1 bis 3, bei dem die integrierte Schaltung (20) in das Substrat des Hologramms integriert ist.

5. Sicherheitsdokument gemäß einem der Ansprüche 1 bis 4, bei dem das Substrat (14) an dem Sicherheitsdokument über eine Klebstoffschicht (12) befestigt ist, die auf der Seite des Substrats angeordnet ist, die der Seite mit der Metallschicht (16) darauf gegenüberliegt.

6. Sicherheitsdokument gemäß einem der Ansprüche 1 bis 5, bei dem das Sicherheitsdokument (2) eine Banknote ist.

7. Verfahren zum Herstellen eines Sicherheitsdokuments eines der Ansprüche 1 bis 6, das den Schritt des Integrierens der Emittervorrichtung (20, 26), die eine integrierte Schaltung (20) und eine mit der integrierten Schaltung verbundene Antenne (26) umfasst, in das Hologramm (10), das ein Substrat (14) mit einer Metallschicht (16) umfasst, umfasst, wobei die Metallschicht (16) des Hologramms (10) wenigstens teilweise wie eine Antenne (26) geformt wird und wobei die integrierte Schaltung (20) mit der antennenartigen Metallschicht (26), die die Antenne der Emittervorrichtung bildet, verbunden wird.

8. Verfahren gemäß Anspruch 7, wobei die integrierte Schaltung (20) der Emittervorrichtung (20, 26) in das Substrat (14) des Hologramms (10) integriert wird.

**Revendications**

1. Document de sécurité comprenant un hologramme (10) et un dispositif émetteur (20, 26) pour émettre des données prédéterminées d'une manière sans contact, le dispositif émetteur (20, 26) étant intégré à l'intérieur de l'hologramme (10) et comprenant un circuit intégré (20) et une antenne (26) connectée au circuit intégré, **caractérisé en ce que** l'hologramme (10) comprend un substrat (14) avec une couche de métal (16) disposée sur au moins une surface de celui-ci, la couche de métal (16) est au moins partiellement formée comme une antenne, et le circuit intégré (20) est connecté à la couche de métal semblable à une antenne (26), qui forme l'antenne du dispositif émetteur.

2. Document de sécurité selon la revendication 1, dans lequel la couche de métal (16) est partiellement formée comme une antenne au format boucle (26).

3. Document de sécurité selon la revendication 1, dans lequel la couche de métal (16) est partiellement formée comme une antenne au format boucle ayant des boucles multiples (26').

4. Document de sécurité selon l'une des revendications 1 à 3, dans lequel le circuit intégré (20) est intégré à l'intérieur du substrat de l'hologramme.

5. Document de sécurité selon l'une des revendications 1 à 4, dans lequel le substrat (14) est attaché au document de sécurité par l'intermédiaire d'une couche adhésive (12) disposée sur le côté du substrat opposé au côté avec la couche de métal (16) sur celui-ci.

**6.** Document de sécurité selon l'une des revendications 1 à 5, dans lequel le document de sécurité (2) est un billet de banque.

**7.** Procédé de production d'un document de sécurité selon l'une des revendications 1 à 6 comprenant l'étape d'intégrer le dispositif émetteur (20, 26) comprenant un circuit intégré (20) et une antenne (26) connectée au circuit intégré à l'intérieur de l'hologramme (10) comprenant un substrat (14) avec une couche de métal (16), dans lequel la couche de métal (16) de l'hologramme (10) est au moins partiellement formée comme une antenne (26) et le circuit intégré (20) est connecté à la couche de métal semblable à une antenne (26), qui forme l'antenne du dispositif émetteur.

**8.** Procédé selon la revendication 7, dans lequel le circuit intégré (20) du dispositif émetteur (20, 26) est intégré à l'intérieur du substrat (14) de l'hologramme (10).

Fig. 1

Fig. 2

Fig. 3

Fig. 4

**EP 1 179 811 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19601358
- DE 19630648 A1
- FR 2802001
- DE 19734855